# EUROPEAN PATENT SPECIFICATION

(11) **EP 3 040 311 B1**
(45) Date of publication and mention of the grant of the patent: **02.08.2023**
(21) Application number: 14841022.8
(22) Date of filing: 26.08.2014
(51) Int. Cl.: C01G 53/04, C22B 3/46

(54) **NICKEL HYDROXIDE PRODUCT AND PREPARATION METHOD THEREOF**
NICKELHYDROXIDPRODUKT UND HERSTELLUNGSVERFAHREN DAFÜR
PRODUIT D'HYDROXYDE DE NICKEL ET SON PROCÉDÉ DE PRÉPARATION

(30) Priority: 26.08.2013 CN 201310376572
(43) Date of publication of application: 06.07.2016
(73) Proprietor: China Enfi Engineering Corp., Beijing 100038 (CN)
(72) Inventor: LU, Yeda, Beijing 100038 (CN); SUN, Ninglei, Beijing 100038 (CN); LIU, Cheng, Beijing 100038 (CN); WANG, Kuiting, Beijing 100038 (CN); LIU, Guo, Beijing 100038 (CN); PENG, Jianhua, Beijing 100038 (CN); ZHANG, Wen, Beijing 100038 (CN); LIU, Jinshan, Beijing 100038 (CN)
(74) Representative: Maiwald GmbH
(86) International application number: PCT/CN2014/085142
(87) International publication number: WO 2015/027888

(56) References cited:
- CN-A- 101 230 422
- CN-A- 102 061 387
- JP-A- 2012 140 668
- RU-C1- 2 208 585
- US-A- 5 840 269

## Description

### FIELD

The present disclosure relates to the field of chemical industry, particularly to a nickel hydroxide product and its preparing method.

### BACKGROUND

In order to precipitate nickel and cobalt from a solution containing nickel, cobalt, manganese and magnesium, sodium hydroxide is often used as precipitant to produce nickel hydroxide, cobalt hydroxide and sodium sulphate. Precipitation with the sodium hydroxide has advantages such as obtained nickel hydroxide being of a high content of nickel and cobalt, being easy to be dissolved and no harmful substance being generated during a treatment with a medicament; and disadvantages such as poor properties of sedimentation and filtration of obtained precipitate, and a high water content of a filter cake. Such characteristics result in many deteriorating technical and economic indicators. As a result, it is required to use a settler or thickener with a large diameter; and a filter press with a high pressure and large area. When there requires a long-distance transportation, a storage space and packing cost will be additionally incurred to increase the transportation cost. Besides, the high water content also leads to a low concentration of nickel and cobalt obtained during an acid solving step, thereby to increase subsequent processing cost.

Therefore, it still needs to improve a method for preparing nickel hydroxide from a nickel-containing solution.

CN102061387A relates to a two-stage nickel precipitation method, which includes: (1) primary nickel precipitation: adding a NaOH solution to a nickel sulfate solution containing magnesium, regulating a pH value to be 7.5-8.5 and reaction being performed at a temperature of 20-80 °C for 0.5-3 h; (2) separating precipitates obtained in the step (1) from a mother liquid; (3) secondary nickel precipitation: adding a NaOH solution to the mother liquid obtained in step (2), regulating the pH value to 9-10 and reaction being performed at a temperature of 20-80 °C for 0.5-3 h; (4) separating precipitates obtained in the step (3) from the mother liquid, and returning precipitates obtained in step (4) to a system of an agitation and leaching procedure for cycling.

### SUMMARY

Embodiments of the present disclosure seek to solve at least one of the problems existing in the related art to at least some extent or provide a useful commercial option. For this purpose, an object of the present disclosure is to provide a method for treating nickel hydroxide, so as to effectively reduce a water content of the nickel hydroxide.

The present disclosure is discovered by the inventor based on the following facts: gelatinous nickel hydroxide is produced when sodium hydroxide is used to precipitate nickel and cobalt by a conventional method, as a result, obtained pulps have disadvantages of poor settleability and filterability and a high water content (about 70-75%) in obtained filter cake. Theoretically, nickel hydroxide is of a nickel content of 63.32%; while actually, the nickel hydroxide is of the nickel content of about 40% due to presences of other impurities and basic salts in nickel hydroxide. Based on such calculation, 2.5 tons of nickel hydroxide is of the nickel content of 1.0 ton, and the water content of 5.83 tons to 7.5 tons. If the water content of the filter cake is reduced to 55%, then the water content corresponding to one ton of nickel will be reduced to 3.06 tons. Even if the water content is reduced to 70% below, the water content will be greatly reduced, thereby to facilitate subsequent disposals and transportations, as well as to reduce cost thereof.

In one aspect, the present disclosure provides in embodiments a method for treating nickel hydroxide. According to embodiments of the present disclosure, the method includes steps of:
(a) enabling a first nickel hydroxide pulp to be in contact with sodium hydroxide for 30 seconds to 60 minutes at a temperature of 40 °C to 80 °C to obtain an alkalized pulp, wherein the sodium hydroxide solution is of a concentration of 20 g/L to 250 g/L;
(b) enabling the alkalized pulp to be in contact with a nickel sulfate solution for 30 minutes to 60 minutes at a temperature of 40 °C to 80 °C to obtain a nickel-precipitated pulp;
(b-1) subjecting the nickel-precipitated pulp to sedimentation, so as to obtain an underflow precipitate as a second nickel hydroxide pulp;
(c) returning at least one part of the nickel-precipitated pulp to the step (a) as the first nickel hydroxide pulp, and repeating the steps (a) and (b) at least for eight times; and
(d) separating the nickel hydroxide from the rest part of the nickel-precipitated pulp,
wherein the step (b) further comprises a step of an aging treatment subsequent to the step of enabling the alkalized pulp to be in contact with the nickel sulfate solution.

According to embodiments of the present disclosure, the method for treating the nickel hydroxide may effectively obtain the nickel hydroxide from the solution containing nickel ions using the sodium hydroxide as precipitant. Further, the alkalized pulp which is firstly prepared is enabled to be in contact with the nickel sulfate solution, so that the settleability of the obtained nickel-precipitated pulp is surprisingly improved, so as to reduce the water content in the nickel hydroxide product. Additionally, the newly-generated nickel hydroxide may deposits on a surface of the nickel hydroxide which already exists in the alkalized pulp, so as to form nickel hydroxide particles with a larger particle size and density. As a result, it is easier to precipitate the nickel hydroxide product of which the filter cake is of a reduced water content. Therefore, the method can not only maintain the advantage of high nickel content when the sodium hydroxide is used as the precipitant but also eliminate its disadvantages such as the poor settleability and filterability of the nickel hydroxide, and the high water content of the filter cake.

According the present disclosure, subsequent to the step (b) and prior to the step (c) the method further includes a step (b-1) of: subjecting the nickel-precipitated pulp to sedimentation, so as to obtain a post-nickel-precipitated solution and a second nickel hydroxide pulp.

According to embodiments of the present disclosure, the method for treating the nickel hydroxide may have the following additional technical features:
According to an embodiment of the present disclosure, in the step (c), at least one part of the second nickel hydroxide pulp is returned to the step (a) as the first nickel hydroxide pulp. Thus, efficiency of preparing the nickel hydroxide may be further improved and the water content of the obtained nickel hydroxide may be further reduced.

According to an embodiment of the present disclosure, prior to the step of returning at least one part of the second nickel hydroxide pulp to the step (a), the at least one part of the second nickel hydroxide pulp is mixed with at least one part of the post-nickel-precipitated solution. Thus, efficiency of preparing the nickel hydroxide may be further improved and the water content of the obtained nickel hydroxide may be further reduced.

According to an embodiment of the present disclosure, in the step (d), the nickel hydroxide is separated from the rest part of the nickel-precipitated pulp by dehydration. Thus, efficiency of preparing the nickel hydroxide may be further improved and the water content of the obtained nickel hydroxide may be further reduced.

According to an embodiment of the present disclosure, the dehydration is conducted through at least one of sedimentation and filter-pressing. Thus, efficiency of preparing the nickel hydroxide may be further improved and the water content of the obtained nickel hydroxide may be further reduced.

According to the present disclosure, in the step (a), the first nickel hydroxide pulp is enabled to be in contact with the sodium hydroxide solution for 30 seconds to 60 minutes at a temperature of 40 °C to 80 °C. Thus, it may obtain the alkalized pulp with an excellent activity, thereby to improve the efficiency of preparing the nickel hydroxide.

According to the present disclosure, in the step (a), the sodium hydroxide solution is of a concentration of 20 g/L to 250 g/L. Thus, it may obtain the alkalized pulp with an excellent activity, thereby to improve the efficiency of preparing the nickel hydroxide.

According to the present disclosure, in the step (b), the alkalized pulp is enabled to be in contact with the nickel sulfate solution for 30 minutes to 60 minutes at a temperature of 40 °C to 80 °C. Thus, it may enable the alkalized pulp to be in contact with the nickel sulfate solution for an optimum period at an optimum temperature, so as to obtain the nickel-precipitated pulp, thereby to increase purity and quantity of the nickel hydroxide precipitated from the nickel-precipitated pulp, and further improve the efficiency of preparing the nickel hydroxide.

According to an embodiment of the present disclosure, in the step (b), the nickel sulfate solution is a sulphuric acid leaching solution of lateritic. The inventor surprisingly finds out that the method for treating the nickel hydroxide according to embodiments of the present disclosure is suitable for effectively preparing the nickel hydroxide with a low water content from a solution containing various complicated constituents, even though such solution contains other metal ions which may react with the sodium hydroxide solution to generate sedimentation. Additionally, it may also effectively improve the efficiency of preparing the nickel hydroxide and reduce the water content of the nickel hydroxide product by using other constituents in the sulphuric acid leaching solution of lateritic.

According to the present disclosure, the step (b) further includes a step of an aging treatment subsequent to the step of enabling the alkalized pulp to be in contact with the nickel sulfate solution. Alternatively, the aging treatment is conducted for 3 hours to 4 hours. Thus, it may increase the particle size of the obtained precipitate in the nickel-precipitated pulp, so as to facilitate further dehydration and densification, thereby to improve effect of subsequent sedimentation or filtration.

According to an embodiment of the present disclosure, the steps (a) and (b) are both conducted in one container. Thus, it may improve the efficiency of preparing the nickel hydroxide, and reduce an equipment investment.

According to an embodiment of the present disclosure, the step (b) is conducted in a plurality of reaction tanks arranged in series. According to an embodiment of the present disclosure, the step (b) is conducted in 4 to 6 reaction tanks arranged in series. According to an embodiment of the present disclosure, the nickel sulfate solution is enabled to be in contact with the alkalized pulp in the first reaction tank among the 4 to 6 reaction tanks arranged in serial, and no additional sodium hydroxide or alkalized pulp is added into rest reaction tanks. Thus, it may further increase the particle size of precipitate in the nickel-precipitated pulp, so as to facilitate further dehydration and densification, thereby to improve the effect of subsequent sedimentation or filtration.

According to an embodiment of the present disclosure, the step (a) is conducted in a feeding pipe. The first nickel hydroxide pulp is enabled to be in contact with the sodium hydroxide in the feeding pipe, so as to add the alkalized pulp to the reaction tank, thereby to improve the efficiency of preparing the nickel hydroxide.

According to an embodiment of the present disclosure, in the step (b-1), the sedimentation is conducted in a thickener, so as to obtain overflow and underflow precipitate, respectively. The overflow is taken as the post-nickel-precipitated solution, and the underflow precipitate is taken as the second nickel hydroxide pulp. Thus, it may further improve efficiency of sedimentation and activity of the alkalized pulp obtained subsequently.

According to the present disclosure, in the step (c), the steps (a) and (b) are repeated at least for eight times. According to an embodiment of the present disclosure, in the step (c), the steps (a) to (c) are repeated for 8 to 16 times. The precipitation amount may be increased through such cycling nickel-precipitating reactions, thereby to improve the efficiency of preparing the nickel hydroxide, decrease the water content of the finally-obtained nickel hydroxide product, and reduce cost for post-treatment, storage and transportation of the nickel hydroxide product.

In another aspect, the present disclosure provides in embodiments a nickel hydroxide product. According to embodiments of the present disclosure, the nickel hydroxide product is obtained by the aforesaid method. According to embodiments of the present disclosure, the nickel hydroxide product is of a water content of 70 wt% or below. According to embodiments of the present disclosure, the nickel hydroxide product includes the nickel hydroxide being of a particle size of 5µm to 25µm. Thus, it may only maintain the advantage of high nickel content when the sodium hydroxide is used as the precipitant but also eliminate its disadvantages such as poor settleability and filterability of the nickel hydroxide and high water content of filter cake, thereby to obtain the nickel hydroxide product with a high quality and low water content.

Additional aspects and advantages of embodiments of present disclosure will be given in part in the following descriptions, become apparent in part from the following descriptions, or be learned from the practice of the embodiments of the present disclosure.

### BRIEF DESCRIPTION OF THE DRAWINGS

These and other aspects and advantages of embodiments of the present disclosure will become apparent and more readily appreciated from the following descriptions made with reference to the drawings, in which:
Fig. 1 is a flow chart showing a method for treating nickel hydroxide according to an embodiment of the present disclosure; and
Fig.2 is a flow chart showing a method for treating nickel hydroxide according to another embodiment of the present disclosure.

### DETAILED DESCRIPTION

Reference will be made in detail to embodiments of the present disclosure. The same or similar elements and the elements having same or similar functions are denoted by like reference numerals throughout the descriptions. The embodiments described herein with reference to drawings are explanatory, illustrative, and used to generally understand the present disclosure. The embodiments shall not be construed to limit the present disclosure.

In addition, terms such as "first" and "second" are used herein for purposes of description and are not intended to indicate or imply relative importance or significance or impliedly indicate quantity of the technical feature referred to. Thus, the feature defined with "first" and "second" may comprise one or more this feature. In the description of the present disclosure, "a plurality of" means two or more than two this features, unless specified otherwise.

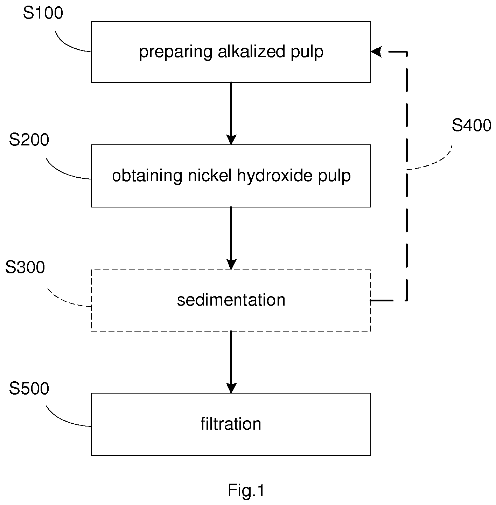

Referring to Fig. 1, the method for treating the nickel hydroxide according to embodiments of the present disclosure is described in details. In Fig. 1, the dotted line indicates an optional step. According to embodiments of the present disclosure, the method includes the following steps.

S 100: enabling a first nickel hydroxide pulp to be in contact with sodium hydroxide to obtain an alkalized pulp.

In this step, the alkalized pulp may be obtained through enabling the nickel hydroxide pulp to be in contact with the sodium hydroxide. The inventor surprisingly finds out that when the alkalized pulp is enable to be in contact with the nickel sulfate solution, e.g., the alkalized pulp is mixed with the nickel sulfate solution, it may effectively increase the particle size of the precipitated nickel hydroxide, so as to further reduce the water content of the finally-obtained nickel hydroxide product. The inventor believes that enabling the sodium hydroxide to be in contact with the nickel hydroxide pulp in advance may improve the capability of nickel hydroxide constituents in the nickel hydroxide pulp to congregate the newly-produced nickel hydroxide.

The term "nickel hydroxide pulp" used herein should be understood broadly, which is referred to as any mixed solutions containing the nickel hydroxide. According to an embodiment of the present disclosure, a nickel-precipitated product from a sulphuric acid leaching solution of lateritic may be used. Thus, other metal elements in the leaching solution may be used to improve the activity of the alkalized pulp.

According to embodiments of the present disclosure, the method may be conducted continuously. Therefore, at least one part of the nickel-precipitated pulp obtained in the step (b) (e.g., the nickel hydroxide pulp obtained after sedimentation, i.e., the second nickel hydroxide pulp) may be taken as the nickel hydroxide pulp (i.e., the first nickel hydroxide pulp) in the present step during practice. Thus, it may further improve the activity of the obtained alkalized pulp.

According to embodiments of the present disclosure, the "nickel hydroxide pulp" used herein may also be obtained through the following steps: firstly, subjecting the sulphuric acid leaching solution of lateritic to a nickel precipitation reaction, for instance, mixing the sulphuric acid leaching solution of lateritic and the sodium hydroxide, to obtain a nickel precipitation reaction product; secondly, subjecting the nickel precipitation reaction product to a solid-liquid separation, such as through sedimentation treatment, to remove the supernatant and obtain the nickel hydroxide pulp. Thus, it may further improve the activity of the obtained alkalized pulp.

It would be appreciated that, for general understanding, other metal components in the leaching solution of lateritic (e.g., the sulphuric acid leaching solution) may adversely affect preparation of the nickel hydroxide. However, the inventor surprisingly finds out that the activity of the nickel hydroxide product being as a seed crystal, which is obtained by precipitating nickel from the leaching solution of lateritic (e.g., the sulphuric acid leaching solution) is significantly higher than that of other materials, thereby to effectively reduce the water content of the nickel hydroxide product.

The term "contact" used herein should be understood broadly, which is referred to as any forms by which reactants may occur a desired reaction. For example, the reactants may be mixed in a container to realize a corresponding chemical or physical reaction. According to an embodiment of the present disclosure, a reaction container in which the nickel hydroxide pulp is enable to be in contact with the sodium hydroxide solution (e.g., mixing) is not subjected to any special restrictions, which may be any containers conventionally-used in the art for adding alkali. According to some embodiments of the present disclosure, the reaction container may be an alkalized tank. According to an embodiment of the present disclosure, the nickel hydroxide pulp is enabled to be in a sufficient contact with the sodium hydroxide solution in such alkalized tank, so as to effectively obtain the alkalized pulp, thereby to increase the activity of the alkalized pulp and efficiency of preparing the nickel hydroxide.

According to embodiments of the present disclosure, the concentration of the sodium hydroxide solution used in this step is not subjected to any special restrictions, as long as it is sufficient for the nickel precipitation reaction with the nickel hydroxide pulp. A person skilled in the art may adjust the concentration of the sodium hydroxide solution as required. According to a specific example of the present disclosure, the inventor surprisingly finds out that when the sodium hydroxide is of the concentration of 20 g/L to 250 g/L, it may enable the nickel hydroxide pulp to be in contact with the sodium hydroxide solution in an appropriate proportion, so as to obtain the nickel-precipitated pulp at an optimum ratio and concentration, thereby to improve the efficiency of preparing the nickel hydroxide.

According to embodiments of the present disclosure, the nickel hydroxide pulp may be in contact with the sodium hydroxide solution under a condition without any restrictions, provided that they are in sufficient contact and mixed in the first container to obtain the alkalized pulp. Those skilled in the art may adjust the specific reaction period and temperature in accordance with reaction. According to the present disclosure, the inventor finds out through abundant experiments that the alkalized pulp can be obtained in an effective way if the solution containing a few of nickel ions, Mg ions and Mn ions is enabled to be in contact with the sodium hydroxide solution for 0.5 min to 60 min at a temperature of 40 °C to 80 °C. Thus, the nickel hydroxide pulp may be in contact the sodium hydroxide solution at an optimum temperature and period, so as to obtain the alkalized pulp with the excellent activity, thereby to improve the efficiency of preparing the nickel hydroxide.

According to an embodiment of the present disclosure, the first nickel hydroxide pulp is mixed with the sodium hydroxide solution in a container provided with a stirring device. Thus, it may obtain the alkalized pulp with the excellent activity to improve the efficiency of preparing the nickel hydroxide. According to an embodiment of the present disclosure, the steps S 100 and S200 are both conducted in one container. Thus, it may improve the efficiency of preparing the nickel hydroxide.

S200: enabling the alkalized pulp to be in contact with a nickel sulfate solution to obtain a nickel-precipitated pulp.

In this step, the nickel sulfate solution containing nickel ions is not subjected to any special restrictions; it may be in any forms or from any sources, provided that the solution contains the nickel ions. According to some embodiments of the present disclosure, the solution containing the nickel ions is a leaching solution of lateritic.

The inventor surprisingly finds out that the method for treating the nickel hydroxide according to embodiments of the present disclosure may effectively prepare the nickel hydroxide using the leaching solution of lateritic with complicated components, thereby to save energy, reduce cost and protect environments.

According to the present disclosure, in the step S200, the alkalized pulp is enabled to be in contact with the nickel sulfate solution for 30 min to 60 min at a temperature of 40 °C to 80 °C. Thus, the alkalized pulp may be in contact with the nickel sulfate solution at an optimum temperature and period, so as to obtain the nickel-precipitated pulp, thereby to improve purity and quantity of the nickel hydroxide precipitated from the nickel-precipitated pulp and the efficiency of preparing the nickel hydroxide.

According to an embodiment of the present disclosure, in the step S200, the nickel sulfate solution is a sulphuric acid leaching solution of lateritic. The inventor surprisingly finds out that the method for treating the nickel hydroxide according to embodiments of the present disclosure may be suitable for effectively preparing the nickel hydroxide with a low water content from a solution containing various complicated components, even though the solution contains other metal ions may react with the sodium hydroxide solution to generate precipitation. Additionally, it may also improve the efficiency of preparing the nickel hydroxide using other components contained in the sulphuric acid leaching solution of lateritic and reduce the water content of the nickel hydroxide product.

According to the present disclosure, the step S200 further includes an aging treatment for the reactant obtained in the step (b), alternatively the aging treatment is conducted for 3h to 4h. Thus, it may increase the particle size of the precipitate in the nickel-precipitated pulp, so as to facilitate dehydration and densification, thereby to improve the effect of subsequent sedimentation or filtration.

According to an embodiment of the present disclosure, the step S200 is conducted in a plurality of reaction tanks arranged in series. According to an embodiment of the present disclosure, the step S200 is conducted in 4 to 6 reaction tanks arranged in serial. According to an embodiment of the present disclosure, the nickel sulfate solution is enabled to be in contact with the alkalized pulp in the first reaction tank among the 4 to 6 reaction tanks arranged in serial, and no additional sodium hydroxide or alkalized pulp is added into rest reaction tanks during the aging treatment for 3 h to 4 h. Thus, it may further increase the particle size of the precipitate in the nickel-precipitated pulp, so as to facilitate further dehydration and densification, thereby to improve the effect of subsequent sedimentation or filtration.

According to an embodiment of the present disclosure, the reaction container in which the alkalized pulp is in contact with the nickel sulfate solution is not subjected to any special restrictions, which may be various containers for precipitating nickel conventionally-used in the art. According to some embodiments of the present disclosure, the reaction container may be a nickel precipitation tank. According to other embodiments of the present disclosure, 4 to 6 nickel precipitation tanks arranged in serial may be used for continuous operations, so that the alkalized pulp and the nickel sulfate solution may be in sufficient contact and react to generate the nickel-precipitated pulp. According to embodiments of the present disclosure, the aging treatment may be conducted in the second and subsequent tanks when 4 to 6 nickel precipitation tanks are used for the nickel precipitation reaction. It should be noted that the inventor finds out that because the precipitate obtained from the precipitate reaction is of a small particle size or of a colloidal particle, then in order to increase the particle size of fine particles, it may prolong the reaction period and conduct the further dehydration or densification, so as to facilitate sedimentation or filtration, and effectively reduce the water content of the finally-obtained nickel hydroxide.

S300: subjecting the nickel-precipitated pulp to sedimentation, so as to obtain a post-nickel-precipitated solution and a second nickel hydroxide pulp.

According to embodiments of the present disclosure, after the nickel-precipitated pulp containing the precipitated nickel hydroxide is obtained by mixing the nickel sulfate solution and the alkalized pulp, at least one part of obtained nickel-precipitated pulp may be returned to the step S 100 as the first nickel hydroxide pulp for preparing the alkalized pulp. According to an embodiment of the present disclosure, the nickel-precipitated pulp may be firstly subjected to sedimentation. According to an embodiment of the present disclosure, the step of subjecting the nickel-precipitated pulp to the sedimentation may densify the nickel hydroxide. According to embodiments of the present disclosure, the reaction container for the sedimentation is not subjected to any special restrictions. It may be various containers for sedimentation or densification in the art. According to some embodiments of the present disclosure, the reaction container may be a thickener. According to an example of the present disclosure, the nickel-precipitated pulp from the nickel precipitation tank flows to the thickener via a central guide barrel. In the thickener, the nickel hydroxide deposits slowly to a bottom of the thickener, thereby to form a pulp with a high-concentration, namely, the underflow. The underflow is then discharged via an outlet located in the middle of the bottom, while the supernatant is discharged via overflow weir. In specific, according to examples of the present disclosure, the nickel-precipitated pulp is subjected to sedimentation in the thickener for 3h to 4h, alternatively for 200 min, so that the nickel-precipitated pulp may achieve sufficient sedimentation in the thickener, so as to obtain the post-nickel-precipitated solution and the concentrated nickel-precipitated pulp, thereby to improve the efficiency of preparing the nickel hydroxide and effectively reduce its water content.

According to the present disclosure, the nickel-precipitated pulp is subjected to sedimentation, so as to obtain the post-nickel-precipitated solution and the second nickel hydroxide pulp. Then, at least one part of the second nickel hydroxide pulp is returned to the step S100 as the first nickel hydroxide pulp. Thus, it may further improve the efficiency of preparing the nickel hydroxide and reduce the water content of the nickel hydroxide.

According to an embodiment of the present disclosure, prior to the step of returning at least one part of the second nickel hydroxide pulp to the step S100, the at least one part of the second nickel hydroxide pulp is mixed with at least one part of the post-nickel-precipitated solution. Thus, it may further improve the efficiency of preparing the nickel hydroxide and reduce the water content of the nickel hydroxide.

S400: repeating.

At least one part of the second nickel hydroxide pulp is returned to the step S100 as the first nickel hydroxide pulp, so as to be in contact with the sodium hydroxide and obtain the alkalized pulp, thereby to facilitate repeating the steps S100∼S200 at least for eight times.

According to embodiments of the present disclosure, the inventor finds out that the method according to the present disclosure may be conducted continuously. Therefore, the nickel hydroxide pulp obtained in the step (c) (the second nickel hydroxide pulp) may be taken as the nickel hydroxide pulp in the present step (the first nickel hydroxide pulp) during practice. Thus, it may further improve the activity of the obtained alkalized pulp, so that the newly-generated nickel hydroxide may attach to the nickel hydroxide particles. As a result, the nickel hydroxide particles contained in the nickel hydroxide pulp may be used as seed crystals to which the newly-generated nickel hydroxide may attach, so as to increase the particle size of the finally-obtained nickel hydroxide, thereby to facilitate the sedimentation and reduction of water content.

According to embodiments of the present disclosure, it may control a property of the finally-obtained nickel hydroxide product by controlling multiplication of the seed crystal. The term "multiplication of the seed crystal" used herein refers to a ratio between the amounts of the nickel hydroxide in the pulp returned to the reaction container and the newly-generated nickel hydroxide. According to , the present disclosure, the multiplication of the seed crystal is at least for eight times; alternatively the multiplication of the seed crystal is 8 to 16. The nickel hydroxide obtained from the nickel precipitation is referred to as the seed crystal, and the concentrated nickel hydroxide pulp may be also known as magma.

According to embodiments of the present disclosure, the aforesaid steps may be conducted continuously during practice, so as to improve the property of the obtained nickel hydroxide product. According to embodiments of the present disclosure, the aforesaid steps may be conducted continuously, alternatively for 2 to 15 cycles. Thus, the water content of the obtained nickel hydroxide product may be further reduced.

The inventor also finds out that a ratio between a precipitation volume of the nickel hydroxide pulp and a total volume of the pulp increases with increasement of the cycles after about 2h sedimentation, from 7-8% up to 15-20%. The particle size of the obtained nickel hydroxide is about 5µm~25µm.

S500: separating the nickel hydroxide from the nickel-precipitated pulp.

After several cycles, it is not required to return the finally-obtained nickel-precipitated pulp for preparing the alkalized pulp. The nickel-precipitated pulp is then subjected to dehydration, so as to obtain the nickel hydroxide product. According to an embodiment of the present disclosure, the dehydration is conducted through at least one of sedimentation and filter-pressing. Thus, it may further improve the efficiency of preparing the nickel hydroxide and reduce the water content of the nickel hydroxide. According to an embodiment of the present disclosure, the dehydration is conducted through at least one of sedimentation and filter-pressing. Thus, it may further improve the efficiency of preparing the nickel hydroxide and reduce the water content of the nickel hydroxide. A filter cake containing the nickel hydroxide may be obtained after filtration, such as filter-pressing, so as to obtain the nickel hydroxide product being of an obviously-reduced water content. The water content of the filter cake of the nickel hydroxide obtained by the method according to embodiments of the present disclosure may be reduced with increasement of seed crystal cycles. According to a specific example of the present disclosure, the water content of the filter cake of the nickel hydroxide is about 63 wt% after 8 times of the seed crystal cycles; 55 wt% or below after 15 times of the seed crystal cycles, thus the obtain nickel hydroxide product may of the water content of 55 wt% or below. According to embodiments of the present disclosure, the nickel hydroxide product includes the nickel hydroxide being of a particle size of 5µm to 25µm. By the method according to embodiments of the present disclosure, precipitation coefficients of nickel and cobalt obtained after 15 times of the seed crystal cycles are 90 wt% and 85 wt%, respectively.

Therefore, the method for treating the nickel hydroxide according to embodiments of the present disclosure may effectively obtain the nickel hydroxide product from the solution containing the nickel ions by taking the sodium hydroxide as the precipitant, so that the obtained nickel hydroxide product is of a low water content. As a result, the method may not only maintain the advantages of high nickel content when the sodium hydroxide is used as the precipitant, but also eliminate the disadvantages such as poor settleability and filterability of the nickel hydroxide and the high water content of the filter cake.

In another aspect, the present disclosure provides in embodiments a nickel hydroxide product. According to embodiments of the present disclosure, the nickel hydroxide product is obtained by the aforesaid method. The nickel hydroxide product is of a water content of 70wt% or below, alternatively even about 55 wt%. According to embodiments of the present disclosure, the nickel hydroxide product includes the nickel hydroxide being of a particle size of 5µm to 25µm. Thus, the method may not only maintain the advantages of a high nickel content when the sodium hydroxide is used as the precipitant, but also eliminate the disadvantages such as poor settleability and filterability of the nickel hydroxide and the high water content of the filter cake.

The method for treating the nickel hydroxide according to embodiments of the present disclosure may be described hereinafter in conjunction with specific examples. It would be appreciated that such examples are only for illustrating the present disclosure, but not intended to limit the present disclosure in any ways. In addition, materials and reagents used in the following examples are known in the art and commercially available.

### General methods

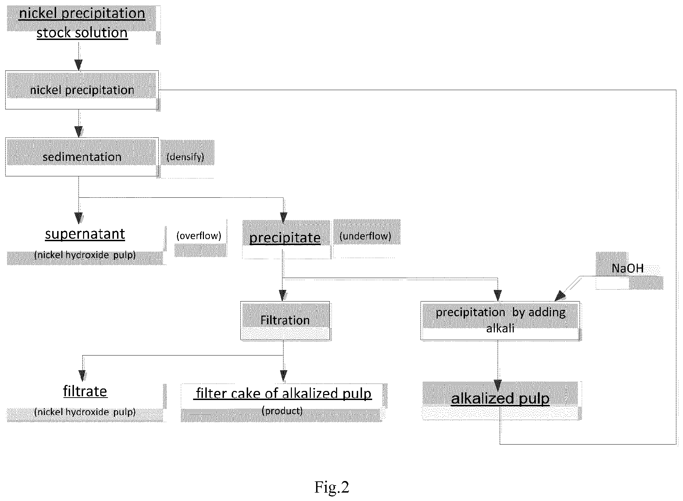

Referring to Fig.2, a general method for treating the nickel hydroxide according to embodiments of the present disclosure is described below.

A nickel sulfate solution and an alkalized pulp are mixed in a first alkalized tank, so as to produce nickel hydroxide. Because the precipitate generated from the precipitation reaction is of a small particle size or a colloidal particle, the obtained reaction product is subjected to an aging treatment for 3h to 4h (for continuous operations, the nickel precipitation process requires 4 to 6 nickel precipitation tanks and the aging treatment is conducted in the second and subsequent tanks) which prolongs the reaction period, enlarges the particle size of the precipitate, thereby facilitates sedimentation or filtration after further dehydration and densification. Such process of prolonging reaction period during the precipitation reaction is referred to as the aging treatment. The pulp from the nickel precipitation tank flows to the thickener for sedimentation, so as to obtain supernatant (i.e., a post-nickel-precipitated solution) as overflow, and precipitate as underflow. The obtained precipitate (i.e., the pulp containing the nickel hydroxide) is mixed with sodium hydroxide, to obtain the alkalized pulp. Then the obtained alkalized pulp is returned to the nickel precipitation tank. After a certain cycles of repeating (i.e., the seed crystal cycles), one part of the obtained precipitate (i.e., the concentrated pulp containing the nickel hydroxide) is subjected to filtration, so as to obtain a filtered solution (i.e., post-nickel-precipitated solution) and a filter cake of the nickel hydroxide.

The term "contact" used herein should be understood broadly, which may be in any forms through which two reactants occur a chemical reaction. For instance, two reactants may be mixed under an appropriate condition.

Six specific examples of the present disclosure are described hereinafter.T Feeding modes and devices used in the examples are summarized in Table 1 below.

**Table 1**

| **Example** | **Feeding mode of alkaline** | **Device for alkaline** | **Operating mode of alkaline** | **Feeding mode of nickel precipitation** | **Operating mode of nickel precipitation** | **Cycles** |
|---|---|---|---|---|---|---|
| 1 | Adding the alkali to nickel hydroxide pulp; and adding alkali and nickel hydroxide pulp simultaneously | Pump, beaker | Intermittent | | | |
| 2 | Adding alkali and nickel hydroxide pulp simultaneously | Pump, beaker | Intermittent | Adding the alkalized pulp to a nickel sulfate solution | Intermittent | 16 |
| 3 | Adding alkali and nickel hydroxide pulp simultaneously | Pump, beaker | Intermittent | Adding the alkalized pulp and a nickel sulfate solution simultaneously | Intermittent | |
| 4 | Adding alkali and nickel hydroxide pulp simultaneously | Closed reactor | Intermittent | Adding the alkalized pulp and a nickel sulfate solution simultaneously | Intermittent | |
| 5 | Adding alkali and nickel hydroxide pulp simultaneously | Closed reactor | Intermittent | Adding the alkalized pulp and a nickel sulfate solution simultaneously | Intermittent | 16 |
| 6 | Adding alkali and nickel hydroxide pulp simultaneously | Closed reactor | Continuous | Adding the alkalized pulp and a nickel sulfate solution simultaneously | Continuous | 16 |

### Example 1 (Reference example)

26.76 mL of 110.9 g/L NaOH is dropwise added to 250 mL of nickel hydroxide pulp for a sufficient mixing at 50 °C within 60 minutes, so as to obtain an alkalized pulp. Such nickel hydroxide pulp includes 0.25 g/L of Ni, 0.069 g/L of Co, 2.06 g/L of Mn and 4.59 g/L of Mg. The obtained alkalized pulp is subjected to nickel precipitation and sedimentation for 4h. A volume of the obtained precipitate accounts for 49.70% of the total volume.

26.76 mL of 110.9 g/L NaOH and 250 mL of nickel hydroxide pulp including 0.25 g/L of Ni, 0.069 g/L of Co, 2.06 g/L of Mn and 4.59 g/L of Mg are added simultaneously to 50 mL of water at a temperature of 50 °C within 60 minutes for sufficient mixing, so as to obtain an alkalized pulp. The obtained alkalized pulp is subjected to nickel precipitation and sedimentation for 4h. A volume of obtained precipitate accounts for 15.38% of the total volume.

### Example 2 (Reference example)

250 mL of nickel hydroxide pulp (including precipitate and water) and 30.36 mL of 96.4 g/L NaOH solution are added simultaneously to 50 mL of post-nickel-precipitated solution at a temperature of 50 °C within 30min. Such nickel hydroxide pulp includes 3.0 g/L of Ni, 0.3 g/L of Co, 2.66 g/L of Mn and 4.60 g/L of Mg. After the nickel precipitation reaction, 330 mL of alkalized pulp are obtained. Such obtained alkalized pulp is added to 700 mL of a nickel sulfate solution within 160 min, allowing the nickel precipitation reaction and sedimentation for 4 hours, then 250 mL of concentrated nickel hydroxide pulp is subjected to repeating the above steps. After 16 cycles of nickel precipitation, the volume of obtained precipitate accounts for 17.3% of the total volume. The precipitate is then subjected to vacuum filtration, to obtain a filter cake being of a water content of 64.19 wt%. After conducting dehydration under a pressure of 1.6 MPa, obtained filter cake is of a water content of 59.65 wt%. Ni(OH)₂ includes 43.70 wt% of Ni and 4.08 wt% of Co, and precipitation coefficient is 83.17% for Ni and 77.98% for Co, respectively.

### Example 3 (Reference example)

220 mL of nickel hydroxide pulp and 32.65 mL of 96.4 g/L NaOH solution are added to 50 mL of water at a temperature of 50 °C within 30 min, so as to obtain alkalized pulp. Such nickel hydroxide pulp includes 3.0 g/L of Ni, 0.3 g/L of Co, 2.66 g/L of Mn and 4.60 g/L of Mg. The obtained alkalized pulp and 700 mL of nickel sulfate solution are added simultaneously to 150 mL of the post-nickel-precipitated solution within 40 min to obtain the nickel precipitation pulp. The obtained nickel-precipitated pulp is then subjected to an aging treatment for 200 min. A volume of obtained precipitate accounts for 17.0% of the total volume and nickel precipitation coefficient is 62.13%.

### Example 4 (Reference example)

200 mL of nickel hydroxide pulp and 35.9 mL of 96.4 g/L alkaline solution are both pumped into a closed reactor at a temperature of 50 °C and mixed for 10 min therein, so as to obtain an alkalized pulp. The obtained alkalized pulp and 700 mL of nickel sulfate solution are added simultaneously to 100 mL of post-nickel-precipitated solution at a temperature of 60 °C within 40 min. After sedimentation for 2 h, a volume of obtained precipitate accounts for 5.48% of the total volume and a nickel precipitation rate is 83.49%.

### Example 5 Test for seed crystal cycles

240 mL of nickel hydroxide pulp and 6.16 mL of alkaline solution are added simultaneously into a closed reactor and mixed therein to obtain an alkalized pulp. Then obtained alkalized pulp and 800 mL of nickel sulfate solution are added simultaneously to 150 mL of post-nickel-precipitated solution at a temperature of 50 °C within 40 min. Then the obtained post-nickel-precipitated solution is subjected to an aging treatment for 200 min. After 8 and 16 times of seed crystal cycles, the following results are obtained:

| Cycles | 8 | 16 |
|---|---|---|
| Ratio between precipitate volume and the total volume after precipitating for 1h | 11.61% | 14.40% |
| Nickel precipitation rate | 87.97% | 85.92% |
| Water content of filter cake (after vacuum filtration) | 62.50% | 60.85% |
| Water content of filter cake (after dehydration at 1.6 Mpa ) | 60.33% | 55.04% |

### Example 6

255 mL of nickel hydroxide pulp including 0.3 g/L of Ni, 0.03 g/L of Co, 2.39 g/L of Mn and 4.60 g/L of Mg and 39.21 mL of 99.2 g/L NaOH solution are added simultaneously into a closed reactor and mixed therein at a temperature of 50 °C, so as to obtain an alkalized pulp. Then obtained alkalized pulp is added into a first nickel precipitation tank for a nickel precipitation reaction with a nickel sulfate solution, so as to obtain a nickel-precipitated pulp. Subsequently, the nickel-precipitated pulp enters into a next nickel precipitation tank, thereby to continue the nickel precipitation. In the present example, the method includes six nickel precipitation tanks arranged in serial for continuous nickel precipitation. The nickel-precipitated pulp is reserved in each nickel precipitation tank for about 40 min. The finally-obtained nickel-precipitated pulp is reserved in an intermediate tank for 1 hour and then enters into a sedimentation tank for 2 hours of sedimentation, so as to obtain the nickel hydroxide pulp. One part of the above-mentioned nickel hydroxide pulp is returned to the step 100 by adding with sodium hydroxide, so as to repeat the above steps. One cycle lasts for about 7h. After 16 cycles, a volume of obtained precipitate of the nickel-precipitated pulp accounts for 17.22% of the total volume; the pulp is of a sedimentation velocity of 0.62 m/h~0.82 m/h within 0~10 min; the filter cake is of a water content of 60.22 wt% after vacuum filtration, and 55.02 wt% after dehydration under a pressure of 1.6 Mpa. The precipitation coefficient is 87% to 88% for Ni and 81% to 82 % for Co. The obtained nickel hydroxide product includes 41.01 wt% of Ni, 4.03 wt% of Co, 6.49 wt% of Mn and 2.46 wt% of Mg.

Reference throughout this specification to "an embodiment," "some embodiments," "one embodiment", "another example," "an example," "a specific example," or "some examples," means that a particular feature, structure, material, or characteristic described in connection with the embodiment or example is included in at least one embodiment or example of the present disclosure. Thus, the appearances of the phrases such as "in some embodiments," "in one embodiment", "in an embodiment", "in another example," "in an example," "in a specific example," or "in some examples," in various places throughout this specification are not necessarily referring to the same embodiment or example of the present disclosure. Furthermore, the particular features, structures, materials, or characteristics may be combined in any suitable manner in one or more embodiments or examples.

## Claims

1. A method for treating nickel hydroxide, comprising steps of:
(a) enabling a first nickel hydroxide pulp to be in contact with sodium hydroxide for 30 seconds to 60 minutes at a temperature of 40 °C to 80 °C to obtain an alkalized pulp, wherein the sodium hydroxide solution is of a concentration of 20 g/L to 250 g/L;
(b) enabling the alkalized pulp to be in contact with a nickel sulfate solution for 30 minutes to 60 minutes at a temperature of 40 °C to 80 °C to obtain a nickel-precipitated pulp;
(b-1) subjecting the nickel-precipitated pulp to sedimentation, so as to obtain an underflow precipitate as a second nickel hydroxide pulp;
(c) returning the second nickel hydroxide pulp of the nickel-precipitated pulp to the step (a) as the first nickel hydroxide pulp, and repeating the steps (a) and (b) at least for eight times; and
(d) separating the nickel hydroxide from the rest part of the nickel-precipitated pulp;
wherein the step (b) further comprises a step of an aging treatment subsequent to the step of enabling the alkalized pulp to be in contact with the nickel sulfate solution.

2. The method according to of claim 1, wherein in the step (d), the nickel hydroxide is separated from the rest part of the nickel-precipitated pulp by dehydration,
preferably the dehydration is conducted through sedimentation or filter-pressing or through sedimentation and filter-pressing.

3. The method according to claim 1or 2, wherein in the step (b), the nickel sulfate solution is a sulphuric acid leaching solution of lateritic.

4. The method according to any one of claims 1 to 3, wherein the steps (a) and (b) are both conducted in one container.

5. The method according to any one of claims 1 to 4, wherein the step (b) is conducted in a plurality of reaction tanks arranged in series.

6. The method according to claim 5, wherein the step (b) is conducted in 4 to 6 reaction tanks arranged in series.

7. The method according to claim 6, wherein the nickel sulfate solution is enabled to be in contact with the alkalized pulp in the first reaction tank among the 4 to 6 reaction tanks arranged in serial, and no additional sodium hydroxide or the alkalized pulp is added into rest reaction tanks.

8. The method according to any one of claims 1 to 7, wherein the step (a) is conducted in a feeding pipe.

## Patentansprüche

1. Verfahren zur Behandlung von Nickelhydroxid, umfassend die folgenden Schritte:
(a) Inkontaktbringen einer ersten Nickelhydroxid-Pulpe mit Natriumhydroxid für 30 Sekunden bis 60 Minuten bei einer Temperatur von 40 °C bis 80 °C, um eine alkalisierte Pulpe zu erhalten, wobei die Natriumhydroxidlösung eine Konzentration von 20 g/L bis 250 g/L aufweist;
(b) 30 bis 60 Minuten lang Inkontakthalten der alkalisierten Pulpe mit einer Nickelsulfatlösung bei einer Temperatur von 40 °C bis 80 °C, um eine mit Nickel gefällte Pulpe zu erhalten;
(b-1) Unterziehen der mit Nickel gefällten Pulpe einer Sedimentation, um einen Unterlaufniederschlag als zweite Nickelhydroxid-Pulpe zu erhalten;
(c) Rückführen der zweiten Nickelhydroxid-Pulpe der mit Nickel gefällten Pulpe zum Schritt (a) als die erste Nickelhydroxid-Pulpe und Wiederholen der Schritte (a) und (b) mindestens achtmal; und
(d) Abtrennen des Nickelhydroxids vom restlichen Teil der mit Nickel gefällten Pulpe;
wobei der Schritt (b) ferner einen Schritt einer Alterungsbehandlung im Anschluss an den Schritt, in dem die alkalisierte Pulpe in Kontakt mit der Nickelsulfatlösung gebracht wird, umfasst.

2. Verfahren gemäß Anspruch 1, wobei im Schritt (d) das Nickelhydroxid vom Rest der mit Nickel gefällten Pulpe durch Entwässerung getrennt wird,
vorzugsweise erfolgt die Entwässerung durch Sedimentation oder Filterpressung oder durch Sedimentation und Filterpressung.

3. Verfahren gemäß Anspruch 1 oder 2, wobei in Schritt (b) die Nickelsulfatlösung eine schwefelsaure Laugungslösung von Laterit ist.

4. Verfahren gemäß einem der Ansprüche 1 bis 3, wobei die Schritte (a) und (b) beide in einem Behälter durchgeführt werden.

5. Verfahren gemäß einem der Ansprüche 1 bis 4, wobei der Schritt (b) in einer Vielzahl von in Reihe angeordneten Reaktionsbehältern durchgeführt wird.

6. Verfahren gemäß Anspruch 5, wobei der Schritt (b) in 4 bis 6 in Reihe angeordneten Reaktionsbehältern durchgeführt wird.

7. Verfahren gemäß Anspruch 6, wobei die Nickelsulfatlösung mit der alkalisierten Pulpe im ersten Reaktionsbehälter der 4 bis 6 in Reihe angeordneten Reaktionsbehälter in Kontakt gebracht wird und kein zusätzliches Natriumhydroxid oder die alkalisierte Pulpe in die übrigen Reaktionsbehälter gegeben wird.

8. Verfahren gemäß einem der Ansprüche 1 bis 7, wobei der Schritt (a) in einem Zuführungsrohr durchgeführt wird.

## Revendications

1. Procédé pour traiter de l'hydroxyde de nickel, comprenant les étapes suivantes :
(a) une première pulpe d'hydroxyde de nickel est laissée être en contact avec de l'hydroxyde de sodium pendant 30 secondes à 60 minutes à une température de 40°C à 80°C pour que soit obtenue une pulpe alcalisée, dans laquelle la solution d'hydroxyde de sodium est à une concentration de 20 g/l à 250 g/l ;
(b) la pulpe alcalisée est laissée être en contact avec une solution de sulfate de nickel pendant 30 minutes à 60 minutes à une température de 40°C à 80°C pour que soit obtenue une pulpe précipitée de nickel ;
(b-1) la pulpe précipitée de nickel est soumise à une sédimentation, pour que soit obtenu un précipité de sous-verse en tant que deuxième pulpe d'hydroxyde de nickel ;
(c) la deuxième pulpe d'hydroxyde de nickel de la pulpe précipitée de nickel est renvoyée vers l'étape (a) en tant que première pulpe d'hydroxyde de nickel, et les étapes (a) et (b) sont répétées au moins huit fois ; et
(d) l'hydroxyde de nickel est séparé de la partie restante de la pulpe précipitée de nickel ;
dans lequel l'étape (b) comprend en outre une étape de traitement de vieillissement subséquent à l'étape dans laquelle la pulpe alcalisée est laissée être en contact avec la solution de sulfate de nickel.

2. Procédé selon la revendication 1, dans lequel, dans l'étape (d), l'hydroxyde de nickel est séparé de la partie restante de la pulpe précipitée de nickel par déshydratation,
de préférence la déshydratation est effectuée par sédimentation ou filtration pressage, ou par sédimentation et filtration pressage.

3. Procédé selon la revendication 1 ou 2, dans lequel, dans l'étape (b), la solution de sulfate de nickel est une solution de lixiviation à l'acide sulfurique de latéritique.

4. Procédé selon l'une quelconque des revendications 1 à 3, dans lequel les étapes (a) et (b) sont toutes deux effectuées dans un seul récipient.

5. Procédé selon l'une quelconque des revendications 1 à 4, dans lequel l'étape (b) est effectuée dans une pluralité de cuves réactionnelles disposées en série.

6. Procédé selon la revendication 5, dans lequel l'étape (b) est effectuée dans 4 à 6 cuves réactionnelles disposées en série.

7. Procédé selon la revendication 6, dans lequel la solution de sulfate de nickel est laissée être en contact avec la pulpe alcalisée dans la première cuve réactionnelle parmi les 4 à 6 cuves réactionnelles disposées en série, et aucun hydroxyde de sodium ou pulpe alcalisée supplémentaire n'est ajouté dans les cuves réactionnelles restantes.

8. Procédé selon l'une quelconque des revendications 1 à 7, dans lequel l'étape (a) est effectuée dans un tuyau d'alimentation.
